# EUROPÄISCHE PATENTANMELDUNG

(11) **EP 2 324 913 A1**
(43) Veröffentlichungstag der Anmeldung: **25.05.2011**
(21) Anmeldenummer: 09173732.0
(22) Anmeldetag: 22.10.2009
(51) Int. Cl.: B01J 21/06, B01J 23/00, B01J 23/652, B01J 35/00, B01J 37/02, B01J 37/04

(54) **Photokatalysator mit erhöhter Tageslichtaktivität**

(71) Anmelder: BASF SE, 67056 Ludwigshafen (DE)
(72) Erfinder: Seeber, Alexandra, 67245 Lambsheim (DE); Schulz, Adelheid, 67067 Ludwigshafen (DE)
(74) Vertreter: Isenbruck, Günter

(57) **Zusammenfassung**

Die vorliegende Erfindung betrifft einen Photokatalysator, enthaltend 70 bis 99,998 Gew.-% wenigstens eines Halbleitermaterials A mit einer Bandlücke von wenigstens 3,0 eV, 0,001 bis 20 Gew.-% wenigstens eines Halbleitermaterials B mit einer Bandlücke von höchstens 3,0 eV und 0,0001 bis 5,0 Gew.-%, jeweils bezogen auf den gesamten Photokatalysator, wenigstens eines Additivs C, wobei die Summe der Mengen an wenigstens einem Halbleitermaterial A, wenigstens einem Halbleitermaterial B und wenigstens einem Additiv C 100 Gew.-% beträgt, ein Verfahren zur Herstellung dieses Photokatalysators, die Verwendung des erfindungsgemäßen Photokatalysators in der Photokatalyse oder in chemischen Reaktionen sowie ein Verfahren zur Behandlung eines Stromes umfassend das Inkontaktbringen des zu behandelnden Stromes mit einem Photokatalysator unter Einwirkung von Licht.

## Beschreibung

Die vorliegende Erfindung betrifft einen Photokatalysator, enthaltend 70 bis 99,998 Gew.-% wenigstens eines Halbleitermaterials A mit einer Bandlücke von wenigstens 3,0 eV, 0,001 bis 20 Gew.-% wenigstens eines Halbleitermaterials B mit einer Bandlücke von höchstens 3,0 eV und 0,0001 bis 5,0 Gew.-%, jeweils bezogen auf den gesamten Photokatalysator, wenigstens eines Additivs C, wobei die Summe der Mengen an wenigstens einem Halbleitermaterial A, wenigstens einem Halbleitermaterial B und wenigstens einem Additiv C 100 Gew.-% beträgt, ein Verfahren zur Herstellung dieses Photokatalysators, die Verwendung des erfindungsgemäßen Photokatalysators in der Photokatalyse oder in chemischen Reaktionen sowie ein Verfahren zur Behandlung eines Stromes umfassend das Inkontaktbringen des zu behandelnden Stromes mit einem Photokatalysator unter Einwirkung von Licht.

Photokatalysatoren, die aufgebaut sind aus zwei oder mehr Komponenten sind aus dem Stand der Technik bereits bekannt.

Linkous et al., Environ. Sci. Technol. 2000, 34, Seiten 4754 bis 4758 offenbaren Photokatalysatoren basierend auf TiO₂ oder WO₃, wobei diese Photokatalysatoren Edelmetall-Co-Katalysatoren enthalten können. Besonders geeignete Edelmetall-CoKatalysatoren gemäß dieser Schrift sind Platin und Iridium, so dass besonders bevorzugte Kombinationen WO₃-Pt, TiO₂-Pt, WO₃-Ir oder TiO₂-Ir sind. Zur Bestimmung der Photoaktivität dieser Photokatalysatoren wird der Abbau von Glukose in Gegenwart der Katalysatoren unter Einwirkung von Licht untersucht.

US 2004/0241040 A1 offenbart eine Katalysatorschicht enthaltend Wolframoxid und Titandioxid, welcher zur Verbesserung von Umgebungsluft in Innenräumen verwendet wird. Dazu wird auf einen Photokatalysator aus Titandioxid eine Beschichtung aus WO₃ aufgebracht. Sowohl Titandioxid als auch WO₃ können mit Metalladditiven wie Gold, Silber, Palladium, Platin und Ruthenium dotiert sein. US 2004/0241040 A1 offenbart nicht, in welcher Menge die Additive eingesetzt werden sollen.

WO 96/26903 offenbart photokatalytisch aktive Verbindungen und ein Verfahren zu ihrer Herstellung. Dazu wird ein Photokatalysator ausgewählt aus TiO₂, WO₃ und Mischungen davon in amorpher Form auf adsorbierende Trägermaterialien aufgebracht. Ein Teil des TiO₂ und/oder WO₃ kann mit wenigstens einem Übergangsmetall des Periodensystems dotiert sein. In dem genannten Dokument wird nicht offenbart, in welchen Mengenverhältnissen TiO₂ und WO₃ in entsprechenden Mischungen vorliegen sollen.

EP 2 072 119 A1 offenbart eine Photokatalysatordispersion und ein Verfahren zu ihrer Herstellung. Die genannte Dispersion enthält TiO₂-Partikel und WO₃-Partikel, wobei Übergangsmetalle als Dotierungsmittel vorliegen können.

Fernandez-Garcia et al., Journal of Catalysis, 245 (2007), Seiten 84 bis 90 offenbaren Photokatalysatoren auf Basis von Titan-Wolfram-Mischoxiden, beispielsweise der Formel Ti_{0.81}W_{0.19}Oₓ, wobei diese Mischoxide Dotierungsmittel, beispielsweise Platin, in einer Menge von 0,3 Gew.-% enthalten können. Mischungen von wenigstens zwei verschiedenen Halbleitermaterialien werden in dieser Schrift nicht offenbart.

Ausserdem ist es aus der Photovoltaik bereits bekannt, dass in Anwendungen wie zum Beispiel in photoelektrochemischen Zellen (Grätzel, Nature, 414 (2001), Seiten 338-344) Halbleitermaterialien, bevorzugt TiO₂, mit organischen oder metallorganischen Additiven im sichtbaren Bereich des Lichtes sensibilisiert werden können. Allerdings ist die Langzeitstabilität dieser gegenüber dem anfallenden Licht (UV-Filter sind generell einzusetzen) sowie gegenüber der photokatalytischen Wirkung des Halbleiters noch verbesserungsbedüftig (Grätzel, C. R. Chimie, 9 (2006), Seiten 578-583).

Die Photokatalysatoren gemäß Stand der Technik können bezüglich ihrer photokatalytischen Aktivität bzw. Stabilität, beispielsweise in wässrigen Medien, noch verbessert werden. Insbesondere können die bekannten Photokatalysatoren in ihrer Aktivität bei Tageslicht verbessert werden.

Aufgabe der vorliegenden Erfindung ist es daher, einen Photokatalysator bereitzustellen, der eine verbesserte Aktivität und eine erhöhte Stabilität, insbesondere bei Bestrahlung mit Tageslicht und/oder in wässrigen Systemen, aufweist, bereitzustellen.

Diese Aufgaben werden gelöst durch den erfindungsgemäßen Photokatalysator, enthaltend 70 bis 99,998 Gew.-% wenigstens eines Halbleitermaterials A mit einer Bandlücke von wenigstens 3,0 eV, 0,001 bis 20 Gew.-% wenigstens eines Halbleitermaterials B mit einer Bandlücke von höchstens 3,0 eV und 0,0001 bis 5,0 Gew.-%, jeweils bezogen auf den gesamten Photokatalysator, wenigstens eines Additivs C, wobei die Summe der Mengen an wenigstens einem Halbleitermaterial A, wenigstens einem Halbleitermaterial B und wenigstens einem Additiv C 100 Gew.-% beträgt.

Die Aufgaben werden des Weiteren gelöst durch ein Verfahren zur Herstellung des erfindungsgemäßen Photokatalysators, durch die Verwendung des erfindungsgemäßen Photokatalysators in der Photokatalyse, sowie durch ein Verfahren zur Behandlung eines Stromes umfassend das Inkontaktbringen des zu behandelnden Stromes mit dem Photokatalysator unter Einwirkung von Licht.

Der erfindungsgemäße Photokatalysator enthält im Wesentlichen drei Komponenten, die im Folgenden detailliert beschrieben werden:
Der erfindungsgemäße Photokatalysator enthält im Allgemeinen 70 bis 99,998 Gew.-%, bevorzugt 75 bis 97 Gew.-%, besonders bevorzugt 80 bis 95 Gew.-%, jeweils bezogen auf den gesamten Photokatalysator, wenigstens eines Halbleitermaterials A mit einer Bandlücke von wenigstens 3,0 eV.

Im Allgemeinen können in dem erfindungsgemäßen Photokatalysator alle Halbleitermaterialien A eingesetzt werden, die eine Bandlücke von wenigstens 3,0 eV aufweisen. Die bevorzugt eingesetzten Halbleitermaterialien weisen eine Halbleiterlücke von höchstens 4,2 eV auf. Durch diese Bandlage der Bandkanten eignet sich der erfindungsgemäße Photokatalysator besonders für die Anwendung in der Oxidation von Wasser oder Kohlenwasserstoffen und für die Anwedung in der Reduktion von Sauerstoff, Protonen, CO₂ oder CO.

Bevorzugt ist in dem erfindungsgemäßen Photokatalysator das wenigstens eine Halbleitermaterial A ausgewählt aus der Gruppe bestehend aus dotiertem oder nicht-dotiertem TiO₂, ZnO, ZnS, GaN, SrTiO₃, NaTaO₃, SiC und Mischungen davon. Ganz besonders bevorzugt liegt in dem erfindungsgemäßen Photokatalysator TiO₂ als Halbleitermaterial A vor.

In einer bevorzugten Ausführungsform des erfindungsgemäßen Verfahrens wird Titandioxid eingesetzt, welches im Wesentlichen in der Anatas-Modifikation vorliegt. "Im Wesentlichen" bedeutet im Rahmen der vorliegenden Erfindung, dass wenigstens 50%, besonders bevorzugt wenigstens 70% des Titandioxids in der Anatas-Modifikation, auf Basis dem Fachmann bekannten XRD-Messmethode, vorliegen. Der Rest des Titandioxides besteht aus amorphem Metalloxid, Brookit- oder Rutil-Modifikation Titandioxid oder eine Mischung davon.

Die Bandlücke der genannten bevorzugten Halbleitermaterialien A betragen 3,0 bis 4,5 eV, bevorzugt 3,0 bis 3,5 eV.

Die in dem erfindungsgemäßen Photokatalysator eingesetzten Halbleitermaterialien A können gegebenenfalls mit wenigstens einem Dotierungsmittel dotiert sein. Geeignete Dotierungsmittel sind dem Fachmann bekannt und beispielsweise ausgewählt aus der Gruppe bestehend aus Cu, Fe, W, La, Zr, Y, V, Cr, Mo, Ta, Nb, Co, Zn, C, S, Si, In, P, B, N, F. Falls vorhanden, liegen die Dotierungsmittel in einer Menge von beispielsweise 0,01 bis 15 Gew.-%, bevorzugt 0,1 bis 10 Gew.-%, jeweils bezogen auf den gesamten Photokatalysator, vor.

Der erfindungsgemäße Photokatalysator enthält des Weiteren im Allgemeinen 0,001 bis 20 Gew.-%, bevorzugt 0,01 bis 15 Gew.-%, besonders bevorzugt 0,1 bis 12 Gew.- %, wenigstens eines Halbleitermaterials B mit einer Bandlücke von höchstens 3,0 eV, jeweils bezogen auf den gesamten Photokatalysator.

Im Allgemeinen können in dem erfindungsgemäßen Photokatalysator alle Halbleitermaterialien B eingesetzt werden, die eine Bandlücke von höchstens 3,0 eV aufweisen. Die bevorzugt eingesetzten Halbleitermaterialien B weisen eine Halbleiterlücke von wenigstens 1,0 eV auf. Durch diese Bandkanten des Halbleitermaterials B wird gewährleistet, dass der erfindungsgemäße Photokatalysator im sichtbaren Bereich absorbiert.

Bevorzugt ist in dem erfindungsgemäßen Photokatalysator das wenigstens eine Halbleitermaterial B ausgewählt aus der Gruppe bestehend aus WO₃, Si, Se, Ge, SiC, AlP, AlAs, AlSb, Fe₂O₃, GaP, GaAs, GaS, GaSb, InN, InP, InAs, InVO₄, InTaO₄, InNbO₄, Bi₂O₃, BiVO₄, Bi₂WO₆, BiOBr, V₂O₅ ZnSe, ZnTe, CdS, CdSe, CdTe, PbS, PbSe, PbTe, CuAlO₂, CuFeO₂, Cu₂O, CuO, TaON und Mischungen davon. Ganz besonders bevorzugt liegt in dem erfindungsgemäßen Photokatalysator WO₃ als Halbleitermaterial B vor.

Die Bandlücke der genannten bevorzugten Halbleitermaterialien B beträgt 1,0 bis 3,0 eV.

Der erfindungsgemäße Photokatalysator enthält des Weiteren im Allgemeinen 0,0001 bis 5,0 Gew.-%, bevorzugt 0,0005 bis 4 Gew.-%, besonders bevorzugt 0,001 bis 3 Gew.-%, jeweils bezogen auf den gesamten Photokatalysator, wenigstens ein Additiv C.

Im Allgemeinen beträgt die Summe der Mengen an wenigstens einem Halbleitermaterial A, wenigstens einem Halbleitermaterial B und wenigstens einem Additiv C 100 Gew.-%.

Im Allgemeinen kann in dem erfindungsgemäßen Photokatalysator als Additiv C jedes dem Fachmann bekannte Additiv eingesetzt werden. In einer bevorzugten Ausführungsform ist das wenigstens eine Additiv C ausgewählt aus der Gruppe bestehend aus Pt, Zr, Ir, Ag, V, Mo, La, Nb, Pd, Rh, Au, Ru, Cu, Verbindungen dieser Metalle und Mischungen davon.

Geeignete Verbindungen der genannten Metalle sind beispielsweise die entsprechenden Oxide, Hydroxide, Sulfide, Nitride, Carbide, Halogenide und organische Verbindungen wie zum Beispiel Acetylacetonate.

Ganz besonders bevorzugt liegt in dem erfindungsgemäßen Photokatalysator Pt, insbesondere in elementarer Form, als Additiv C vor.

Die erhöhte Aktivität des erfindungsgemäßen Photokatalysators, insbesondere bei Bestrahlung mit Tageslicht, beruht im Wesentlichen auf der erfindungsgemäßen Kombination der Komponenten A, B und C, in den jeweils angegebenen Mengen.

Daher betrifft die vorliegende Erfindung in einer bevorzugten Ausführungsform den erfindungsgemäßen Photokatalysator, wobei das Halbleitermaterial A TiO₂, das Halbleitermaterial B WO₃ und das Additiv C Pt ist.

In dem erfindungsgemäßen Photokatalysator bleibt in einer bevorzugten Ausführungsform die Bandstruktur des wenigstens einen Halbleitermaterials A durch die Mischung mit wenigstens einem Halbleitermaterial B unverändert. Dadurch wird der Halbleiter A im sichtbaren Bereich des Lichtes sensibilisiert, ohne dass seine oxidativen und reduktiven Kräfte verringert werden. Dadurch wird seine Fähigkeit zur Photokatalyse, insbesondere bei Verwendung von Tageslicht, im Vergleich zu bekannten Tageslichtphotokatalysatoren, deren Bandstruktur durch einen Modifikator verkleinert wird, verbessert.

Daher betrifft die vorliegende Erfindung in einer bevorzugten Ausführungsform den erfindungsgemäßen Photokatalysator, wobei die Bandstruktur des wenigstens einen Halbleitermaterials A durch die Mischung mit wenigstens einem Halbleitermaterial B unverändert bleibt.

In dem erfindungsgemäßen Photokatalysator wird die photokatalytisch aktive Oberfläche des wenigstens einen Halbleitermaterials A durch die Mischung mit wenigstens einem Halbleitermaterial B reduziert. Die katalytische Reaktion läuft an der Oberfläche des Halbleitermaterials A ab und Beschichtung dieser Oberfläche führt zu einer Reduktion in Photokatalysatoraktivität.

Daher betrifft die vorliegende Erfindung in einer bevorzugten Ausführungsform den erfindungsgemäßen Photokatalysator, wobei die photokatalytisch aktive Oberfläche des wenigstens einen Halbleitermaterials A durch die Mischung mit wenigstens einem Halbleitermaterial B um nicht mehr als 20%, bevorzugt 15%, besonders bevorzugt 10% reduziert.

Die vorliegende Erfindung betrifft auch ein Verfahren zur Herstellung des erfindungsgemäßen Photokatalysators, umfassend wenigstens die folgenden Schritte:
(A) Imprägnieren des wenigstens einen Halbleitermaterials A, des wenigstens einen Halbleitermaterials B oder eines Gemisches davon mit einer Lösung oder Dispersion enthaltend das wenigstens eine Additiv C oder eine Vorläuferverbindung des wenigstens einen Additivs C,
(B) gegebenenfalls Überführen der Vorläuferverbindung des wenigstens einen Additivs C in das wenigstens eine Additiv C auf dem Halbleitermaterial A, dem Halbleitermaterial B oder einem Gemisch davon aus Schritt (A), um ein Material zu erhalten, welches wenigstens ein Additiv C enthält,
(C) gegebenenfalls Trocknen des in Schritt (A) oder (B) erhaltenen Materials,
(D) gegebenenfalls Vermischen des Materials aus Schritt (A), (B) oder (C) mit wenigstens einem Halbleitermaterial A oder B, um den Photokatalysator zu erhalten, und
(E) gegebenenfalls Kalzinieren des in Schritt (D) erhaltenen Photokatalysators.

Die einzelnen Schritte des erfindungsgemäßen Verfahrens werden im Folgenden detailliert beschreiben:

### Schritt (A):

Schritt (A) des erfindungsgemäßen Verfahrens umfasst das Imprägnieren des wenigstens einen Halbleitermaterials A, des wenigstens einen Halbleitermaterials B oder eines Gemisches davon mit einer Lösung oder Dispersion enthaltend das wenigstens eine Additiv C oder eine Vorläuferverbindung des wenigstens einen Additivs C.

Es ist erfindungsgemäß möglich, das wenigstens eine Halbleitermaterial A, das wenigstens eine Halbleitermaterial B oder ein Gemisch davon mit einer Lösung oder Dispersion enthaltend das wenigstens eine Additiv C oder eine Vorläuferverbindung des wenigstens einen Additivs C zu imprägnieren.

Entsprechende erfindungsgemäß geeignete Halbleitermaterialien A, B, sowie Additive C sind oben bereits genannt worden.

Bevorzugt wird zunächst das wenigstens eine Halbleitermaterial A imprägniert. In einer weiteren bevorzugten Ausführungsform wird zunächst das wenigstens eine Halbleitermaterial B imprägniert.

Verfahren zur Imprägnierung sind dem Fachmann im Allgemeinen bekannt, beispielsweise Eintauchen der zu imprägnierenden Materialien in eine entsprechende Lösung oder Dispersion, Besprühen des zu imprägnierenden Materials mit einer entsprechenden Lösung oder Dispersion, photo- oder elektrochemische Abscheidung.

Eine entsprechende Lösung oder Dispersion enthält das wenigstens eine Additiv oder eine Vorläuferverbindung des wenigstens einen Additivs. Beispiele für geeignete Additive sind Verbindungen oder Komplexe der oben genannten Additive C. besonders bevorzugte Vorläuferverbindungen für das wenigstens eine Additiv C sind ausgewählt aus der Gruppe bestehend aus H₂PtCl₆, H₂PtCl₄, PtCl₂, Pt(acac)₂ und Mischungen davon.

Die in Schritt (A) des erfindungsgemäßen Verfahrens eingesetzte Lösung oder Dispersion kann im Allgemeinen jedes dem Fachmann bekannte Lösungs- bzw. Dispersionsmittel enthalten, beispielsweise ausgewählt aus der Gruppe bestehend aus Wasser, Alkoholen, beispielsweise Ethanol, Methanol, Propanol, Ketonen, beispielsweise Aceton, Ethern, beispielsweise Diethylether, Tetrahydrofuran und Mischungen davon.

Daher betrifft die vorliegende Erfindung auch das erfindungsgemäße Verfahren, wobei in Schritt (A) eine wässrige oder alkoholische Lösung oder Dispersion eingesetzt wird.

Die Herstellung einer entsprechenden Lösung oder Dispersion erfolgt nach dem Fachmann bekannten Verfahren.

Schritt (A) des erfindungsgemäßen Verfahrens wird im Allgemeinen bei einer geeigneten Temperatur durchgeführt, beispielsweise 10 bis 150 °C, bevorzugt 15 bis 120 °C, wobei diese von dem eingesetzten Additiv bzw. der entsprechenden Vorläuferverbindung abhängig sein kann.

### Schritt (B):

Der optionale Schritt (B) des erfindungsgemäßen Verfahrens umfasst das Überführen der Vorläuferverbindung des wenigstens einen Additivs C in das wenigstens eine Additiv C auf dem Halbleitermaterial A, dem Halbleitermaterial B oder einem Gemisch davon aus Schritt (A), um ein Material zu erhalten, welches wenigstens ein Additiv C enthält.

Der optionale Schritt (B) des erfindungsgemäßen Verfahrens wird dann angewendet, wenn in Schritt (A) des erfindungsgemäßen Verfahrens eine Vorläuferverbindung des Additivs C eingesetzt worden ist. Wird in Schritt (A) direkt das Additiv C eingesetzt, kann Schritt (B) entfallen.

Das Überführen der Vorläuferverbindung des Additivs C in Schritt (B) des erfindungsgemäßen Verfahrens kann nach allen dem Fachmann bekannten Verfahren erfolgen, beispielsweise Reduktion, Kalzinierung oder photochemische oder electrochemische Umwandlung. Bevorzugt wird das in Schritt (A) erhaltene Material zunächst getrocknet und anschließend kalziniert. Das Kalzinieren erfolgt bevorzugt bei einer Temperatur von 100 bis 800 °C, besonders bevorzugt 200 bis 600 °C. Das Kalzinieren erfolgt bevorzugt in Luft.

### Schritt (C):

Der optionale Schritt (C) des erfindungsgemäßen Verfahrens umfasst das Trocknen des in Schritt (A) oder (B) erhaltenen Materials.

Der erfindungsgemäße Schritt (C) wird dann bevorzugt durchgeführt, wenn das in Schritt (A) oder (B) erhaltene Material für die weiteren Schritte oder für eine Anwendung, beispielsweise in der Photokatalyse nicht trocken genug, d. h. noch Lösungs- bzw. Dispersionsmittel in dem Material vorhanden ist.

Geeignete Verfahren zum Trocknen sind dem Fachmann bekannt, beispielsweise Erhitzen des zu trocknenden Materials auf eine Temperatur von beispielsweise 50 bis 300 °C, bevorzugt 80 bis 250 °C. Alternativ oder zusätzlich kann ein Druck unterhalb Atmosphärendruck, beispielsweise unterhalb 900 mbar, bevorzugt unterhalb 800 mbar, besonders bevorzugt unterhalb 500 mbar, angewendet werden.

### Schritt (D):

Der optionale Schritt (D) des erfindungsgemäßen Verfahrens umfasst das Vermischen des Materials aus Schritt (A), (B) oder (C) mit wenigstens einem Halbleitermaterial A oder B, um den Photokatalysator zu erhalten.

Abhängig davon, welches Material in Schritt (A) mit dem wenigstens einen Additiv C oder einer Vorläuferverbindung davon imprägniert worden ist, wird Schritt (D) durchgeführt.

Ist in Schritt (A) das wenigstens eine Halbleitermaterial A mit wenigstens einem Additiv oder einer Vorläuferverbindung davon imprägniert worden, erfolgt in Schritt (D) bevorzugt das Vermischen mit dem wenigstens einen Halbleitermaterial B.

Ist in Schritt (A) das wenigstens eine Halbleitermaterial B mit wenigstens einem Additiv oder einer Vorläuferverbindung davon imprägniert worden, erfolgt in Schritt (D) bevorzugt das Vermischen mit dem wenigstens einen Halbleitermaterial A.

Ist in Schritt (A) eine Mischung von wenigstens einem Halbleitermaterial A und wenigstens einem Halbleitermaterial B mit wenigstens einem Additiv oder einer Vorläuferverbindung davon imprägniert worden, muss Schritt (D) nicht durchgeführt werden.

Es ist erfindungsgemäß möglich, dass in Schritt (D) Halbleitermaterial A und/oder B zugemischt wird, auch wenn die entsprechenden Materialien bereits in Schritt (A) vorgelegen haben.

Der erfindungsgemäße Photokatalysator enthält in einer bevorzugten Ausführungsform Die Komponenten A, B und C. Sollte neben diesen Komponenten eine oder mehrere weitere Komponenten vorliegen, werden diese bevorzugt ebenfalls in Schritt (D) zugemischt.

Schritt (D) des erfindungsgemäßen Verfahrens erfolgt im Allgemeinen nach dem Fachmann bekannten Verfahren, beispielsweise durch die an sich bekannte Verwendung von Mischapparaturen wie beispielsweise Blattrührer, Rührstab, Überkopfrührer, Mühlen, beispielsweise Ballmühle, nass oder trocken, mechanisches Rühren, Mörsern, etc..

Schritt (D) kann bei allen geeigneten Temperaturen und Drücken durchgeführt werden, beispielsweise bei Raumtemperatur und Atmosphärendruck.

Nach Schritt (D) des erfindungsgemäßen Verfahrens wird im Wesentlichen der erfindungsgemäße Photokatalysator erhalten, und kann entsprechend eingesetzt werden, beispielsweise in der Photokatalyse.

### Schritt (E):

Der optionale Schritt (E) des erfindungsgemäßen Verfahrens umfasst das Kalzinieren des in Schritt (D) erhaltenen Photokatalysators.

Das Kalzinieren in dem optionalen Schritt (E) des erfindungsgemäßen Verfahrens erfolgt im Allgemeinen, wenn in Schritten (C) oder (D) organische oder thermisch umzuwandelnde Komponenten zugegeben worden sind.

Im Allgemeinen sind dem Fachmann Verfahren und Bedingungen zum Kalzinieren bekannt. Bevorzugt erfolgt das Kalzinieren in Schritt (E) des erfindungsgemäßen Verfahrens bei einer Temperatur von 100 bis 700 °C, bevorzugt 120 bis 600 °C. Das Kalzinieren kann im Allgemeinen bei jedem geeigneten Druck erfolgen.

Das Kalzinieren in Schritt (E) erfolgt im Allgemeinen in einer entsprechenden Atmosphäre. Diese kann inert, reduzierend oder oxidierend sein. In einer bevorzugten Ausführungsform wird in Schritt (E) eine Luftatmosphäre verwendet. Geeignete inerte Gase sind dem Fachmann bekannt, beispielsweise Edelgase wie Helium oder Argon, Stickstoff etc. Geeignete reduzierende Gase sind dem Fachmann bekannt, beispielsweise Wasserstoff, Ammoniak etc. Geeignete oxidierende Gase sind dem Fachmann bekannt, beispielsweise Sauerstoff, Stickstoffoxide, Luft etc.

Nach oder während der Herstellung des erfindungsgemäßen Photokatalysators kann dieser in jede dem Fachmann bekannte Form gebracht werden, beispielsweise Stränge, Presslinge, Kugeln, Tabeletten, Stifte, Splitt, Formkörper, Beschichtungen, Monolithe, keramische Schäume, oder als Teilkomponent in einer Formulierung, beispielsweise in Farben, Pulverfilmen, Lacken, Plastik, Polymeren, Beton, Fugen, Zement, Mörtel Beschichtungen, Wandstrich, Papier, Textilien, Glasur, Suspensionen, Dispersionen formuliert werden. Verfahren zur Formgebung sind im Allgemeinen Fachmann bekannt.

In einer bevorzugten Ausführungsform liegt der erfindungsgemäße Photokatalysator als Pulver, Suspension, Dispersion, Film, Beschichtung, Formkörper, beispielsweise Tabletten, Stränge, Kugeln, in einer Formulierung oder in geträgerter Form, beispielsweise auf einem Substrat wie Zeolith, Monolith, keramische, organische oder metalloxidische Materialien, vor.

Durch das erfindungsgemäße Herstellungsverfahren wird ein erfindungsgemäßer Photokatalysator erhalten, der sich durch eine besonders hohe Aktivität, insbesondere in der Photokatalyse unter Verwendung von Tageslicht, auszeichnet. Des Weiteren wird ein Photokatalysator mit einer verbesserten Stabilität erhalten. Besonders bevorzugt wird der erfindungsgemäße Photokatalysator durch das erfindungsgemäße Herstellungsverfahren erhalten.

Daher eignet sich der erfindungsgemäße Photokatalysator insbesondere für die Verwendung in der Photokatalyse.

Daher betrifft die vorliegende Erfindung auch die Verwendung des erfindungsgemäßen Photokatalysators in der Photokatalyse oder Photoelektrokatalyse. Erfindungsgemäß kann der Photokatalysator in jeder Photokatalyse eingesetzt werden. In einer bevorzugten Ausführungsform wird der erfindungsgemäße Photokatalysator in einer oxidativen Umwandlung organischer Molekülen, beispielsweise in der photokatalytischen Wasserreinigung, in der photokatalytischen Luftreinigung, Desodorisierung, in der photokatalytischen Selbst-Reinigung oder anti-bakteriellen Wirkung, Herstellung von Aldehyden aus Alkoholen verwendet. Daher betrifft die vorliegende Erfindung bevorzugt die Verwendung des erfindungsgemäßen Photokatalysators in der Photokatalyse, wobei es eine oxidative Umwandlung organischer Stoffe ist.

Des Weiteren betrifft die vorliegende Erfindung auch die Verwendung des erfindungsgemäßen Photokatalysators in chemischen Reaktionen. In einer bevorzugten Ausführungsform ist die chemische Reaktion eine Oxidation von substituierten oder nicht-substituierten Kohlenwasserstoffen ist. In einer weiteren bevorzugten Ausführungsform ist die die chemische Reaktion eine Reduktion von Protonen, Kohlenstoffmonoxid und/oder Kohlenstoffdioxid.

Die vorliegende Erfindung betrifft auch ein Verfahren zur Behandlung eines Stromes, insbesondere eines flüssigen oder gasförmigen Stromes, umfassend das Inkontaktbringen des zu behandelnden Stromes mit einem erfindungsgemäßen Photokatalysator unter Einwirkung von Licht, insbesondere Tageslicht.

Dem erfindungsgemäßen Verfahren zur Behandlung eines Stromes kann gegebenenfalls wenigstens ein Oxidationsmittel zugesetzt werden. Durch Zugabe des wenigstens einen Oxidationsmittels kann die photokatalytische Aktivität weiter erhöht werden. Erfindungsgemäß geeignete Oxidationsmittel sind flüssig oder gasförmig und beispielsweise ausgewählt aus der Gruppe bestehend aus Sauerstoff ggf. sauerstoffhaltigen Gemischen, beispielsweise Luft, Wasserstoffperoxid, Ozon, Peroxidisulfat, Nitrate, Salpetersäure, Stickstoffoxide, Chloroxid, Chlor und Mischungen davon.

Daher betrifft die vorliegende Erfindung insbesondere auch ein Verfahren zur Behandlung eines Stromes, wobei dem Strom wenigstens ein Oxidationsmittel zugesetzt wird.

### Beispiele:

### Beispiel 1

### Bestimmung der photokatalytischen Aktivität im Tageslicht in der Flüssigphase

Die Photoaktivitäten der hergestellten Pulver werden durch die Geschwindigkeit des photokatalytischen Abbaus des chlorierten Kohlenwasserstoffs Dichloressigsäure (DCA) in Suspension ermittelt.

Es werden als Tageslichtlampen Osram Biolux Lampen (18W) mit einem Abstand zur Rührplatte von 31 cm eingesetzt. Die Gesamtlaufzeit der Versuche zur Überprüfung der Geschwindigkeit des photokatalytischen Abbaus von DCA unter Bestrahlung mit Tageslicht in wässriger Lösung liegt bei 24 Stunden.

Der pH-Wert der Suspension wird mit Natronlauge auf 3 eingestellt. Die Temperatur im Reaktor liegt im Bereich von 20 bis 30 °C. Die Konzentration des DCA beträgt 20 mmol/L, und die Konzentration des entsprechenden Photokatalysators beträgt 3 g/L. Durch Bestimmung des pH-Werts nach 24 Stunden lässt sich die Abbaugeschwindigkeit (ppm/h) ermitteln.

Es werden Blindversuche zum Abbau von DCA unter Bestrahlung mit Zusatz eines Standardphotokatalysators aus Titandioxid, zum einen P25^{®} der Fa. Degussa (VG 2), zum anderen FinnTi^{®} S150 der Fa. Sachtleben (VG 3) durchgeführt. Es werden weiterhin Blindversuche zum Abbau von DCA unter Bestrahlung ohne Zusatz von Photokatalysator durchgeführt (VG 1).

### Beispiel 2

WO₃ aus verschiedenen Quellen werden gemäß Beispiel 1 getestet.

### Beispiel 3

3 g P25^{®} (Fa. Degussa) werden mit 150 mg WO₃ (Fa. Alfa Aesar, Tungsten(VI)oxide, 99,8 %) über 3 h bei Raumtemperatur mit einem mechanischen Rührer gerührt. Das Material wird gemäß Beispiel 1 getestet.

### Beispiel 4

3 g FinnTi^{®} S150 (Fa. Sachtleben) werden mit 150 mg WO₃ (Fa. Alfa Aesar, Tungsten(VI)oxide, 99,8 %) über 3 h bei Raumtemperatur mit einem mechanischen Rührer gerührt. Das Material wird gemäß Beispiel 1 getestet.

### Beispiel 5

3 g P25^{®} (Fa. Degussa) werden mit 300 mg WO₃ (Fa. Alfa Aesar, Tungsten(VI)oxide, 99,8 %) über 3 h bei Raumtemperatur mit einem mechanischen Rührer gerührt. Das Material wird gemäß Beispiel 1 getestet.

### Beispiel 6

3 g FinnTi^{®} S150 (Fa. Sachtleben) werden mit 300 mg WO₃ (Fa. Alfa Aesar, Tungsten(VI)oxide, 99,8 %) über 3 h bei Raumtemperatur mit dem mechanischen Rührer gerührt. Das Material wird gemäß Beispiel 1 getestet.

### Beispiel 7

2 g P25^{®} (Fa. Degussa) werden mit einer Lösung aus 1,4 mg H₂PtCl₆ in 3 mL VE-Wasser getränkt. Das getränkte Pulver wird 2 h bei 80 °C und 1 h bei 400 °C unter Luft kalziniert. Das Material wird gemäß Beispiel 1 getestet.

### Beispiel 8

2 g P25^{®} (Fa. Degussa) werden mit einer Lösung aus 2,1 mg H₂PtCl₆ in 3 mL VE-Wasser getränkt. Das getränkte Pulver wird 2 h bei 80 °C und 1 h bei 400 °C unter Luft kalziniert. Das Material wird gemäß Beispiel 1 getestet.

### Beispiel 9

2 g FinnTi^{®} S150 (Fa. Sachtleben) werden mit einer Lösung aus 1,4 mg H₂PtCl₆ in 2 mL VE-Wasser getränkt. Das getränkte Pulver wird 2 h bei 80 °C und 1 h bei 400 °C unter Luft kalziniert. Das Material wird gemäß Beispiel 1 getestet.

### Beispiel 10

2 g FinnTi^{®} S150 (Fa. Sachtleben) werden mit einer Lösung aus 2,1 mg H₂PtCl₆ in 2 mL VE-Wasser getränkt. Das getränkte Pulver wird 2 h bei 80 °C und 1 h bei 400 °C unter Luft kalziniert. Das Material wird gemäß Beispiel 1 getestet.

### Beispiel 11

1 g WO₃ (verschiedene kommerziell erhältliche) wird in einer Lösung aus 2,52 mg H₂PtCl₆ (39,69% Pt) auf 0,28 mL mit VE-Wasser aufgefüllt, getränkt. Das getränkte Pulver wird über Nacht bei 80 °C und 2 h bei 400 °C unter Luft kalziniert. Das Material wird gemäß Beispiel 1 getestet.

### Beispiel 12

1 g WO₃ (verschiedene kommerziell erhältliche) wird in einer Lösung aus 0,252 mg H₂PtCl₆ (39,69% Pt) auf 0,28 mL mit VE-Wasser aufgefüllt, getränkt. Das getränkte Pulver wird über Nacht bei 80 °C und 2 h bei 400 °C unter Luft kalziniert. Das Material wird gemäß Beispiel 1 getestet.

### Beispiel 13

5 g P25^{®} (Fa. Degussa) werden mit einer Lösung enthaltend 1,05 mg H₂PtCl₆ (10%ige Lsg.) auf 7,5 mL mit VE-Wasser aufgefüllt, getränkt. Das getränkte Pulver wird 2 h bei 80 °C und 1 h bei 400 °C unter Luft kalziniert. 1 g dieses Material wird mit 100 mg WO₃ (Alfa Aesar) in einem Mörser gut gemischt und dann gemörsert. Das Material wird gemäß Beispiel 1 getestet.

### Beispiel 14

50 g P25^{®} (Fa. Degussa) werden mit einer Lösung enthaltend 52,5 mg H₂PtCl₆ (10%ige Lsg.) auf 75 mL mit VE-Wasser aufgefüllt, getränkt. Das getränkte Pulver wird 2 h bei 80 °C und 1 h bei 400 °C unter Luft kalziniert. 1 g dieses Material wird mit 100 mg WO₃ (Alfa Aesar) in einem Mörser gut gemischt und dann gemörsert. Das Material wird gemäß Beispiel 1 getestet.

### Beispiel 15

5 g P25^{®} (Fa. Degussa) werden mit einer Lösung enthaltend 5,25 mg H₂PtCl₆ auf 7,5 mL mit VE-Wasser aufgefüllt, getränkt. Das getränkte Pulver wird 2 h bei 80 °C und 1 h bei 400 °C unter Luft kalziniert. 1 g dieses Materials wird mit 100 mg WO₃ (Alfa Aesar) in einem Mörser gut gemischt und dann gemörsert. Das Material wird gemäß Beispiel 1 getestet.

### Beispiel 16

5 g P25^{®} (Fa. Degussa) werden mit einer Lösung enthaltend 1,05 mg H₂PtCl₆ (10%ige Lsg.) auf 7,5 mL mit VE-Wasser aufgefüllt, getränkt. Das getränkte Pulver wird 2 h bei 80 °C und 1 h bei 400 °C unter Luft kalziniert. 1 g dieses Material wird mit 100 mg WO₃ (Nanopowder, <100nm, Fa. Aldrich) in einem Mörser gut gemischt und dann gemörsert. Das Material wird gemäß Beispiel 1 getestet.

### Beispiel 17

50 g P25^{®} (Fa. Degussa) werden mit einer Lösung enthaltend 52,5 mg H₂PtCl₆ (10%ige Lsg.) auf 75 mL mit VE-Wasser aufgefüllt, getränkt. Das getränkte Pulver wird 2 h bei 80 °C und 1 h bei 400 °C unter Luft kalziniert. 1 g dieses Material wird mit 100 mg WO₃ (Nanopowder, <100nm, Fa. Aldrich) in einem Mörser gut gemischt und dann gemörsert. Das Material wird gemäß Beispiel 1 getestet.

### Beispiel 18

5 g P25^{®} (Fa. Degussa) werden mit einer Lösung enthaltend 10,5 mg H₂PtCl₆ (10%ige Lsg.) auf 7,55 mL mit VE-Wasser aufgefüllt, getränkt. Das getränkte Pulver wird 2 h bei 80 °C und 1 h bei 400 °C unter Luft kalziniert. 1 g dieses Material wird mit 100 mg WO₃ (Nanopowder, <100nm, Fa. Aldrich) in einem Mörser gut gemischt und dann gemörsert. Das Material wird gemäß Beispiel 1 getestet.

### Beispiel 19

7 g P25^{®} (Fa. Degussa) werden mit 350 mg W03 (Alfa Aesar) in einem Mörser gut gemischt und dann gemörsert. Das Pulver wird in einer Lösung aus 1,75 mg H₂PtCl₂ (39,96% Pt) auf 10,5 mL mit VE-Wasser aufgefüllt, getränkt. Das getränkte Pulver wird 2 h bei 80 °C und 1 h bei 400 °C unter Luft kalziniert. Das Material wird gemäß Beispiel 1 getestet.

### Beispiel 20

7 g P25^{®} (Fa. Degussa) werden mit 350 mg WO₃ (Alfa Aesar) in einem Mörser gut gemischt und dann gemörsert. Das Pulver wird in einer Lösung aus 0,875 mg H₂PtCl₂ (39,96% Pt) auf 10,5 mL mit VE-Wasser aufgefüllt, getränkt. Das getränkte Pulver wird über Nacht bei 80 °C und 1 h bei 400 °C unter Luft kalziniert. Das Material wird gemäß Beispiel 1 getestet.

### Beispiel 21

3 g P25^{®} (Fa. Degussa) werden in einer Lösung aus 1,36 mg Pd-nitratlösung TypA (11%Pd) auf 4,5 mL mit VE-Wasser aufgefüllt, getränkt. Das getränkte Pulver wird über Nacht bei 80 °C und 2 h bei 400 °C unter Luft kalziniert. Das Material wird gemäß Beispiel 1 getestet.

### Beispiel 22

3 g P25^{®} (Fa. Degussa) werden in einer Lösung aus 13,6 mg Pd-nitratlösung TypA (11%Pd) auf 4,5 mL mit VE-Wasser aufgefüllt, getränkt. Das getränkte Pulver wird über Nacht bei 80 °C und 2 h bei 400 °C unter Luft kalziniert. Das Material wird gemäß Beispiel 1 getestet.

### Beispiel 23

3 g P25^{®} (Fa. Degussa) werden in einer Lösung aus 27,3 mg Pd-nitratlösung TypA (11%Pd) auf 4,5 mL mit VE-Wasser aufgefüllt, getränkt. Das getränkte Pulver wird über Nacht bei 80 °C und 2 h bei 400 °C unter Luft kalziniert. Das Material wird gemäß Beispiel 1 getestet.

Die Ergebnisse der Tests sind in Tabelle 1 zusammengefasst:

**Tabelle 1**

| Beispiel | | AG gem. Besp. 1 [ppm/h] | Aktivität relativ zu P25^{®}[%] |
|---|---|---|---|
| VG 1 | Ohne Katalysator | 0 | 0 |
| VG 2 | P25^{®}(Degussa) | 4 | 100 |
| VG 3 | FinnTi^{®} (Kemira) | 5 | 125 |
| 2 | WO₃ im Bereich von | 1,45 | 36 |
| | bis | 2,65 | 66 |
| 3 | 5%WO₃ mit TiO₂(P25^{®}) | 2,5 | 63 |
| 4 | 5% WO₃ mit TiO₂ (FinnTi S150^{®}) | 5,41 | 135 |
| 5 | 10% WO₃ mit TiO₂ (P25^{®}) | 3,15 | 79 |
| 6 | 10% WO₃ mit TiO₂ (FinnTi S150^{®}) | 3,28 | 82 |
| 7 | 0,03% Pt auf P25^{®} | 11,56 | 289 |
| 8 | 0,05% Pt auf P25^{®} | 11,01 | 275 |
| 9 | 0,03% Pt auf FinnTi S150^{®} | 5,75 | 144 |
| 10 | 0,05% Pt auf FinnTi S150^{®} | 7,76 | 194 |
| 11 | 0,1% Pt auf WO₃ im Bereich von | 1,93 | 48 |
| | bis | 7,94 | 189 |
| 12 | 0,01 % Pt auf WO₃ im Bereich von | 1,92 | 38 |
| | bis | 4,97 | 124 |
| 13 | 10% WO₃ mit 0,001 % Pt auf P25^{®} | 3,34 | 84 |
| 14 | 10% WO₃ mit 0,005% Pt auf P25^{®} | 9,34 | 234 |
| 15 | 10% WO₃ mit 0,05% Pt auf P25^{®} | 15,61 | 390 |
| 16 | 10% WO₃ Nanopulver mit 0,001% Pt auf P25^{®} | 3,16 | 79 |
| 17 | 10% WO₃ Nanopulver mit 0,005% Pt auf P25^{®} | 7,44 | 186 |
| 18 | 10% WO₃ Nanopulver mit 0,01 % Pt auf P25^{®} | 6,85 | 171 |
| 19 | 5% WO₃ auf P25^{®} mit 0,01 % Pt getränkt | 14,14 | 354 |
| 20 | 5% WO₃ auf P25^{®} mit 0,005% Pt getränkt | 9,21 | 230 |
| 21 | 0,005% Pd auf P25^{®} | 5,19 | 130 |
| 22 | 0,05% Pd auf P25^{®} | 4,21 | 105 |
| 23 | 0,1% Pd auf P25^{®} | 4,22 | 105 |

| | | | |
|---|---|---|---|
| alle Prozentangaben sind Gew.-%, AG bedeutet Abbaugeschwindigkeit | | | |

### Beispiel 24

Die Photoaktivitäten ausgewählter Materialien werden durch die Geschwindigkeit des photokatalytischen Abbaus von Acetaldehyd (AA) in der Gasphase in einem Festbettreaktor ermittelt.

Es werden als Tageslichtquelle eine Energiesparlampe (16W, Fa. Radium Lampenwerk GmbH) mit einem Abstand zum Photokatalysator von ca. 1 cm eingesetzt. Die Gesamtlaufzeit der Versuche zur Überprüfung der Geschwindigkeit des photokatalytischen Abbaus von AA unter Bestrahlung mit Tageslicht in wässriger Lösung liegt bei 3 Stunden.

Das hergestellte Pulver wird verformt (zum Beispiel Stränge, Tabletten usw) und ggf. gesplittet (1,6 mm - 2,0 mm). Die Temperatur im Reaktor liegt im Bereich von 15 °C bis 100 °C. Die Katalysatormenge beträgt 120 ml entspricht 119 g in einer bestrahlten Höhe von 9 cm. Das AA-Gasgemisch (150 ppm AA, H₂O-Gehalt 600 ppm) in Luft wird über das Katalysatorfestbett geleitet (Durchflussrate 100 NL/h). Durch Untersuchung der Gasphase auf AA mittels Gaschromatographie lassen sich die Abbaugeschwindigkeiten (mmolAA/h) ermitteln, die mit der Abbaugeschwindigkeit vom Standardphotokatalysator P25 (Fa. Degussa) verglichen wurden.

Es werden Blindversuche zum Abbau von AA unter Bestrahlung mit Zusatz eines Standardphotokatalysators (P25, Fa. Degussa) in Form vom 1,6-2,0 mm Splitt durchgeführt. Es werden weiterhin Blindversuche zum Abbau von AA unter Tageslicht-Bestrahlung ohne Zusatz von Photokatalysator durchgeführt.

| Beispiel | | Aktivität relativ zu P25^{®}[%] |
|---|---|---|
| VG 4 | Ohne Katalysator | 0 |
| VG 5 | P25^{®}(Degussa) | 100 |
| 25 | 0,05Gew.% Pt auf P25^{®} | 126 |
| 26 | 1 0Gew.% WO₃ mit P25^{®} | 275 |
| 27 | 10Gew.% WO₃ mit 0,005Gew.% Pt auf P25^{®} | >606 (100% Abbau) |

### Vergleichsbeispiele 5

170 g P25 (Degussa, VG5) werden mit 3,5%iger HCOOH-Lösung verknetet. Nach 3h Knetzeit werden 1,7 g Methylcellulose (Walocel, Fa. Pufas Werk KG/decotric GmbH) und 3 g VE-Wasser zugegeben. Nach 0,5 h Knetzeit ist die Masse verstrangbar. Die Knetmasse wird zu 1,5 mm Strängen verformt (Pressdruck 80-90 bar). Die Stränge werden über 16 h bei 120 °C im Umlufttrockenschrank und über 3 h bei 400 °C im Muffelofen kalziniert. Die Stränge werden durch ein 2,0 mm Sieb gedrückt und in einem 1,6 mm Sieb aufgefangen. Der Splitt der kleiner als 1,6 mm ist, wird abgesiebt, so dass nur die Fraktion 1,6-2,0 mm übrig bleibt.

### Beispiel 25

200 g P25 (Degussa) werden in einer Lösung aus 260 mg H₂PtCl₆ in 300 mL VE-Wasser getränkt. Das getränkte Pulver wird über Nacht bei 80 °C getrocknet und 3 h bei 400 °C kalziniert. Das so hergestellte Pulver wird durch ein 400 µm-Sieb gegeben und mit 1,5%iger HCOOH-Lösung verknetet. Nach 1 h Knetzeit werden 3 g Methylcellulose (Walocel, Fa. Pufas Werk KG/decotric GmbH) und 3 g Alkox E160, PEO (1%, Fa.Union Carbide) zugegeben. Nach zwei Stunden Knetzeit ist die Masse verstrangbar. Die Knetmasse wird zu 1,5 mm Strängen verformt (Pressdruck 50 bar). Die Stränge werden über 16 h bei 120 °C im Umlufttrockenschrank und über 3 h bei 400 °C im Muffelofen kalziniert. Stränge Schneidhärte: 4,4 N. Das Material wird gemäß Beispiel 24 getestet.

### Beispiel 26

Ein Gemisch aus 300 g P25 (Degussa) und 30 g WO₃ (99,8%, Fa. ABCR) wird mit 3,5%iger HCOOH-Lösung verknetet. Nach 2 h Knetzeit wurden 3 g Methylcellulose (Walocel, Fa. Pufas Werk KG/decotric GmbH) und 35 g VE-Wasser zugegeben. Nach einer viertel Stunde Knetzeit ist die Masse verstrangbar. Die Knetmasse wird zu 1,5 mm Strängen verformt (Pressdruck 80-90 bar). Die Stränge werden über 16 h bei 120 °C im Umlufttrockenschrank und über 3 h bei 400 °C im Muffelofen kalziniert. Stränge Schneidhärte: 14,5 N. Das Material wird gemäß Beispiel 24 getestet.

### Beispiel 27

400 g P25 (Degussa) werden in einer Lösung aus 500 mg H₂PtCl₆.H₂O in 600 mL VE-Wasser getränkt. Das getränkte Pulver wird über Nacht bei 80 °C getrocknet und 3 h bei 400 °C kalziniert. Das so hergestellte Pulver wird durch ein 400 µm-Sieb gegeben und mit 1,5%iger HCOOH-Lösung verknetet. Nach 1 h Knetzeit werden 4 g Methylcellulose (Walocel, Fa. Pufas Werk KG/decotric GmbH) und 93 g VE-Wasser zugegeben. Nach 0,5 h Knetzeit ist die Masse verstrangbar. Die Knetmasse wird zu 1,5 mm Strängen verformt (Pressdruck 110 bar). Die Stränge werden über 16 h bei 120 °C im Umlufttrockenschrank und über 3 h bei 400 °C im Muffelofen kalziniert. Stränge Schneidhärte: 10,1 N. Das Material wird gemäß Beispiel 24 getestet.

## Patentansprüche

1. Photokatalysator, enthaltend 70 bis 99,998 Gew.-% wenigstens eines Halbleitermaterials A mit einer Bandlücke von wenigstens 3,0 eV, 0,001 bis 20 Gew.-% wenigstens eines Halbleitermaterials B mit einer Bandlücke von höchstens 3,0 eV und 0,0001 bis 5,0 Gew.-%, jeweils bezogen auf den gesamten Photokatalysator, wenigstens eines Additivs C, wobei die Summe der Mengen an wenigstens einem Halbleitermaterial A, wenigstens einem Halbleitermaterial B und wenigstens einem Additiv C 100 Gew.-% beträgt.

2. Photokatalysator nach Anspruch 1, **dadurch gekennzeichnet, dass** das wenigstens eine Halbleitermaterial A ausgewählt ist aus der Gruppe bestehend aus dotiertem oder nicht-dotiertem TiO₂, ZnO, ZnS, SrTiO₃, NaTaO₃, GaN, SiC und Mischungen davon.

3. Photokatalysator nach Anspruch 1 oder 2, **dadurch gekennzeichnet, dass** das wenigstens eine Halbleitermaterial B ausgewählt ist aus der Gruppe bestehend aus WO₃, Si, Se, Ge, SiC, AlP, AlAs, AlSb, Fe₂O₃, GaP, GaAs, GaS, GaSb, InN, InP, InAs, InVO₄, InTaO₄, InNbO₄, Bi₂O₃, BiVO₄, Bi₂WO₆, BiOBr, V₂O₅ ZnSe, ZnTe, CdS, CdSe, CdTe, PbS, PbSe, PbTe, CuAlO₂, CuFeO₂, Cu₂O, CuO, Ta-ON und Mischungen davon.

4. Photokatalysator nach einem der Ansprüche 1 bis 3, **dadurch gekennzeichnet, dass** das wenigstens eine Additiv C ausgewählt ist aus der Gruppe bestehend aus Pt, Zr, Ir, Ag, V, Mo, La, Nb, Pd, Rh, Au, Ru, Cu, Verbindungen dieser Metalle und Mischungen davon.

5. Photokatalysator nach einem der Ansprüche 1 bis 4, **dadurch gekennzeichnet, dass** die Bandstruktur des wenigstens einen Halbleitermaterials A durch die Mischung mit wenigstens einem Halbleitermaterial B unverändert bleibt.

6. Photokatalysator nach einem der Ansprüche 1 bis 5, **dadurch gekennzeichnet, dass** das Halbleitermaterial A TiO₂, das Halbleitermaterial B WO₃ und das Additiv C Pt ist.

7. Photokatalysator nach einem der Ansprüche 1 bis 6, **dadurch gekennzeichnet, dass** er als Pulver, Suspension, Dispersion, Film, Beschichtung, Formkörper, in geträgerter oder formulierter Form vorliegt.

8. Verfahren zur Herstellung eines Photokatalysators nach einem der Ansprüche 1 bis 7, umfassend wenigstens die folgenden Schritte:
(A) Imprägnieren des wenigstens einen Halbleitermaterials A, des wenigstens einen Halbleitermaterials B oder eines Gemisches davon mit einer Lösung oder Dispersion enthaltend das wenigstens eine Additiv C oder eine Vorläuferverbindung des wenigstens einen Additivs C,
(B) gegebenenfalls Überführen der Vorläuferverbindung des wenigstens einen Additivs C in das wenigstens eine Additiv C auf dem Halbleitermaterial A, dem Halbleitermaterial B oder einem Gemisch davon aus Schritt (A), um ein Material zu erhalten, welches wenigstens ein Additiv C enthält,
(C) gegebenenfalls Trocknen des in Schritt (A) oder (B) erhaltenen Materials,
(D) gegebenenfalls Vermischen des Materials aus Schritt (A), (B) oder (C) mit wenigstens einem Halbleitermaterial A oder B, um den Photokatalysator zu erhalten, und
(E) gegebenenfalls Kalzinieren des in Schritt (D) erhaltenen Photokatalysators.

9. Verfahren nach Anspruch 8, **dadurch gekennzeichnet, dass** in Schritt (A) eine wässrige oder alkoholische Lösung oder Dispersion eingesetzt wird.

10. Verwendung des Photokatalysators nach einem der Ansprüche 1 bis 7 in der Photokatalyse oder Photoelektrokatalyse.

11. Verwendung nach Anspruch 10, **dadurch gekennzeichnet, dass** es eine photokatalytische Abwasserreinigung ist.

12. Verwendung nach Anspruch 10, **dadurch gekennzeichnet, dass** es eine photokatalytische Luftreinigung ist.

13. Verwendung nach Anspruch 10, **dadurch gekennzeichnet, dass** es eine photokatalytische selbstreinigende oder anti-bakterielle Wirkung ist.

14. Verwendung des Photokatalysators nach einem der Ansprüche 1 bis 7 in chemischen Reaktionen.

15. Verwendung nach Anspruch 14, **dadurch gekennzeichnet, dass** die chemische Reaktion eine Oxidation von substituierten oder nicht-substituierten Kohlenwasserstoffen ist.

16. Verwendung nach Anspruch 14, **dadurch gekennzeichnet, dass** die chemische Reaktion eine Reduktion von Protonen, Kohlenstoffmonoxid und/oder Kohlenstoffdioxid ist.

17. Verfahren zur Behandlung eines Stromes, umfassend das Inkontaktbringen des zu behandelnden Stromes mit einem Photokatalysator nach einem der Ansprüche 1 bis 7 unter Einwirkung von Licht.

18. Verfahren nach Anspruch 17, **dadurch gekennzeichnet, dass** dem zu behandelnden Strom wenigstens ein Oxidationsmittel zugesetzt wird.
